Europäisches Patentamt

European Patent Office

Office européen des brevets

(19)

(11) Numéro de publication: **0 254 610 B1**

(12) **FASCICULE DE BREVET EUROPEEN**

(45) Date de publication de fascicule du brevet:
07.08.91

(51) Int. Cl.5: **B01D 11/04**, B01F 15/04

(21) Numéro de dépôt: 87401465.7

(22) Date de dépôt: 25.06.87

(54) Procédés de séparation à l'aide d'un fluide supercritique.

(30) Priorité: 25.07.86 FR 8610809

(43) Date de publication de la demande:
27.01.88 Bulletin 88/04

(45) Mention de la délivrance du brevet:
07.08.91 Bulletin 91/32

(84) Etats contractants désignés:
AT BE CH DE ES GB GR IT LI LU NL SE

(56) Documents cités:
DE-A- 2 737 793
US-A- 2 941 941
US-A- 4 008 163

R.E. Treybal, MASS-TRANSFER OPERATIONS,
McGraw-Hill Book Company, 1980, 3rd ed.,
pp. 187-193, 542-544

(73) Titulaire: SOCIETE NATIONALE ELF AQUITAI-
NE
Tour Elf, 2, Place de la Coupole, La Défense
6
F-92400 Courbevoie(FR)

(72) Inventeur: Jusforgues, Pascal
20 rue des Fauvettes
F-95200 Sarcelles(FR)
Inventeur: Perrut, Michel
35 rue du 4ème BCT
F-54210 St. Nicolas De Port(FR)

(74) Mandataire: Hirsch, Marc-Roger
Cabinet Hirsch 34 rue de Bassano
F-75008 Paris(FR)

EP 0 254 610 B1

## Description

La présente invention a pour objet un procédé d'extraction/séparation/préparation mettant en oeuvre un fluide en état supercritique constitué d'un mélange comprenant majoritairement un fluide dit solvant et, jusqu'à une concentration pondérale de 10%, un second fluide, appelé additif, l'étape de séparation des produits étant par ailleurs mise en évidence par une variation importante du pouvoir solvant du mélange initial grâce à la diminution de sa masse volumique entrainée par sa dépressurisation dans des conditions quasi isothermes.

Dans l'art antérieur, il existe de très nombreux procédés d'extraction, de séparation, de préparation, faisant appel à des fluides à l'état supercritique. Ces divers procédés rencontrent un certain succès du fait de leur facilité de mise en oeuvre et de leur relativement bas prix de revient auquel on parvient, mais on se heurte à un certain nombre d'inconvénients auxquels la présente invention entend porter remède.

Pour illustrer cet art antérieur, on peut citer par exemple les procédés de fractionnement de mélanges par chromatographie d'élution avec fluide supercritique tel celui décrit dans FR-A-2527934. Selon ce procédé l'éluant à l'état supercritique circule en continu à débit constant à travers une colonne de chromatographie; on y injecte, de manière périodique en tête de colonne, le mélange à fractionner, les fractions du mélange étant recueillies, détectées à la sortie de la colonne et dirigées sélectivement chacune vers un séparateur d'une batterie de séparateurs dans laquelle, par réchauffage et détente, l'éluant est séparé des constituants du mélange, lesdits constituants étant recueillis au pied des séparateurs, l'éluant en tête de ceux-ci. L'éluant recueilli est purifié, ramené à l'état supercritique et recyclé en tête de colonne. L'éluant le plus couramment utilisé dans ce genre de procédé est le dioxyde de carbone, du fait de la facilité de sa mise en oeuvre, puisqu'il est non toxique et non inflammable, de son bas prix de revient et de ses propriétés physico-chimiques (températue critique voisine de l'ambiante).

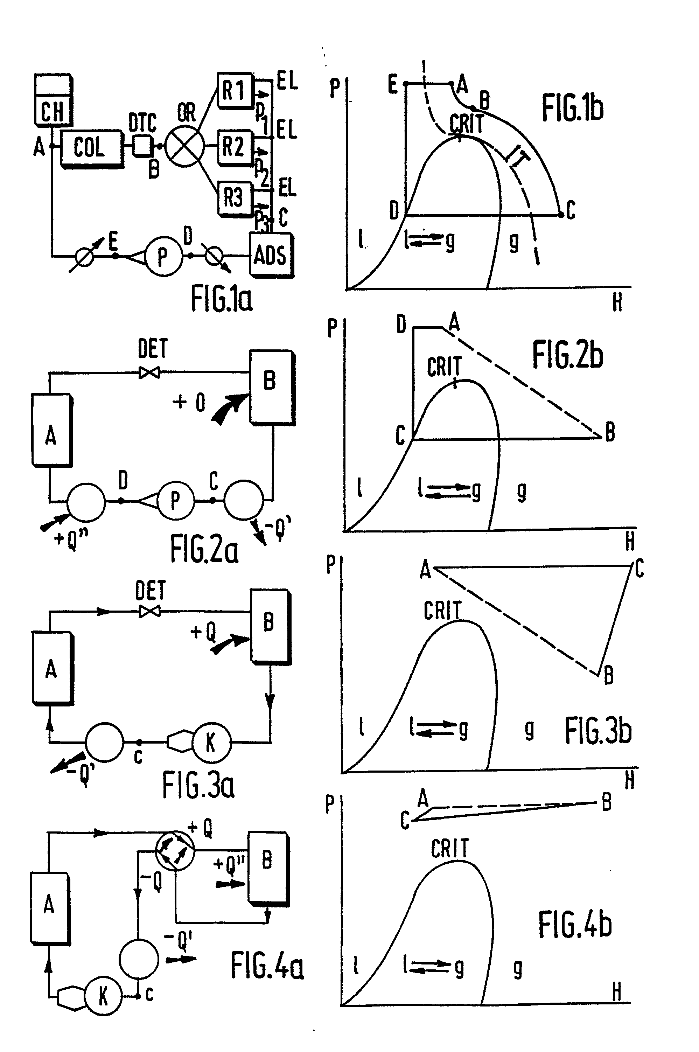

C'est ce principe qui est mis en oeuvre dans la demande de brevet français ci-dessus indiquée. Si l'on se rapporte aux figures 1 qui représentent en 1a un schéma de circuit et en 1b le diagramme de Mollier de l'éluant dioxyde de carbone pur, on peut suivre le cycle de l'éluant selon ce procédé: l'injection de la charge CH à fractionner a lieu dans l'éluant supercritique en A sous forme de "créneaux périodiques". La séparation a lieu dans la colonne COL à la sortie de laquelle un détecteur DTC permet de reconnaître la variation de la concentration en produits (point B) qui seront orientés (en OR) de façon périodique dans des recettes R1, R2, R3 où ils sont séparés P1, P2, P3 de l'éluant EL par détente isotherme entre B et C. L'éluant gazeux est purifié sur des lits d'adsorbants ADS puis liquéfiés en D et pompés en (E) avant d'être réchauffés et réinjectés dans la colonne au point (A). Les lettres A, B, C, D, E, des figures 1a et 1b correspondent entre elles. La courbe AC, comme la courbe IT, sont des isothermes.

Or, l'expérience a montré que pour de nombreuses séparations d'intérêt industriel, les temps de rétention observés avec un éluant pur sont très longs ce qui conduit à une très faible productivité de procédé.

Cette chromatographie avec éluant supercritique est mise en oeuvre dans des colonnes remplies de support poreux du même type que les colonnes utilisées en chromatographie en phase liquide à haute performance (HPLC). Ces résultats corroborent ceux obtenus par de nombreux chercheurs utilisant la chromatographie supercritique à des fins analytiques; ils ont constaté que certains produits lourds ou peu solubles dans l'éluant sont trop fortement adsorbés sur la phase stationnaire et restent bloqués dans la colonne ou ne sortent qu'avec des temps de rétention trop longs pour être acceptables. Depuis longtemps, il a été constaté que l'adjonction à l'éluant d'une faible concentration d'alcool permet de réduire très sensiblement les temps de rétention observés en chromatographie analytique avec éluant supercritique, sans pour autant réduire l'efficacité de la séparation; ce phénomène largement employé et décrit reste mal connu et semble ne pas avoir reçu à ce jour d'interprétation définitive.

D'autre part, la purification de l'éluant sur des lits d'adsorbants afin de le débarrasser des traces de produits constituant le mélange à séparer, n'est pas simple à mettre en oeuvre et surtout à conduire, afin d'éviter des pollutions des produits purifiés.

L'un des objets de la présente invention sera un procédé permettant à la fois de débarrasser l'éluant des produits entraînés après les séparateurs produits/éluant et la réalisation d'un éluant constitué d'un mélange comprenant une très forte concentration d'un solvant classique utilisé en extraction ou en chromatographie supercritique (tel que le dioxyde de carbone, le protoxyde d'azote, les fluorochlorométhanes et autres fluorocarbones, les hydrocarbures légers, etc.) appelés dans ce qui suit solvant et d'une faible concentration (le titre massique est le plus souvent inférieur à 10%) d'un solvant liquide classique (hydrocarbures de $C_4$ à $C_{10}$, alcools de $C_1$ à $C_5$, par exemple) appelés dans ce qui suit modificateur.

En effet, il est facile de réaliser un tel mélange solvant/modificateurs et de mettre en oeuvre le procédé, puis la séparation, de l'extrait en boucle ouverte. Il est beaucoup moins facile de mettre en oeuvre ces

2

opérations lorsque le fluide est recyclé comme cela est décrit dans la demande de brevet citée ci-dessus, car lors de la séparation fluide/produits, il est fréquent qu'une partie du modificateur reste dissoute dans l'extrait. Dès lors, la concentration en modificateur de fluide recyclé s'en trouve modifié et les temps de rétention des produits injectés profondément altérés. L'utilisation industrielle de ces mélanges implique donc de maîtriser parfaitement la concentration du fluide en modificateur: on pourrait imaginer de mesurer en continu cette concentration et de réaliser, à l'aide d'une pompe, les ajouts nécessaires, mais cette méthode est très difficile et coûteuse car une telle mesure est complexe.

La présente invention a pour objet un procédé d'extraction/séparation/préparation, tel que précité, caractérisé en ce que ce mélange est obtenu par la mise au contact du mélange gazeux issu de l'étape de séparation des produits, et en ce que ce contact est effectué avec une quantité d'additifs suffisante, dite excès d'additif, pour que, dans des conditions de pression et de température prédéterminées, l'additif soit liquide, le fluide étant à faible masse volumique, ce qui assure l'élimination des traces restantes des produits, le réajustement de la composition du mélange et son recyclage, et le maintien de la concentration en additif.

D'autres procédés d'extraction, séparation, fractionnement par fluide supercritique de l'art antérieur sont basés sur le fait que ces fluides présentent des propriétés remarquables par rapport aux liquides, notamment une plus faible viscosité et une plus grande diffusion. Ils présentent une propriété plus intéressante encore, à savoir les caractéristiques de leur pouvoir solvant: ainsi lorsqu'on passe de l'état gazeux sous-critique à l'état fluide supercritique, on rencontre non seulement des variations importantes de masse volumique, mais également une augmentation considérable de la solubilité de tiers corps. De plus, contrairement à l'extraction liquide/liquide ou liquide/ solide, la séparation finale solvant/extrait ne constitue pas une étape difficile et coûteuse faisant appel, par exemple, à la ré-extraction par un second solvant ou à la distillation mais peut être facilement mise en oeuvre par simple détente isothermique ou voisine de l'isothermicité ou par chauffage à pression constante ou par combinaison des deux modes précédents, la variation brutale du pouvoir solvant et la démixtion de l'extrait étant obtenues par une forte diminution de la masse volumique dans la chromatographie.

Si certaines de ces propriétés des fluides supercritiques sont été utilisées, par exemple la chromatographie préparative, d'autres procédés sont utilisés qui font appel à ces diverses propriétés: l'art antérieur concerne d'ailleurs essentiellement les procédés d'extraction dont on peut rappeler les principes suivants:

Pour fixer les idées, on peut en citer trois exemples de réalisation faisant l'objet des figures 2 à 4. Les figures d'indice "a" représentant les schémas de circuits, les figures d'indice "b", sur diagrammes enthalpiques, les cycles correspondants. Aux figures 2a à 5a, on a désigné par les lettres majuscules, des points ou appareillages repérés par les mêmes lettres sur les diagrammes enthalpiques 2b à 4b. Sur ces mêmes diagrammes, l'étape séparative est représentée en pointillés sur le cycle. Aux figures 2 et 3, cette séparation solvant extrait est réalisée par baisse de pression et apport de chaleur pour éviter le refroidissement dû à la détente, mais le recyclage du solvant diffère. Aux figures 2, on utilise une pompe P pour élever la pression du liquide condensé sous-critique et l'amener à l'état fluide supercritique. Aux figures 3, on utilise un compresseur K pour amener le gaz sous-critique à l'état fluide supercritique, puis un échangeur -Q' pour refroidir le fluide à la température désirée. Aux figures 4, la séparation solvant extrait est réalisée par élévation de température, le recyclage du solvant étant réalisé à l'aide du compresseur K fonctionnant à faible taux de compression en régime établi.

Pour être plus explicite, on va considérer les trois cas séparément. - figures

A      fractionnement par extraction solvant/extrait;

AB      étape de séparation: détente dans détendeur DET et apport de chaleur +Q pour arriver en B à l'état gazeux sous-critique;

BC      étape de condensation: perte de chaleur -Q', le gaz se condense en liquide, à pression constante sous-critique;

CD      étape de recompression: grâce à la pompe P pour remontée en pression supercritique;

DA      étape de réchauffage: par apport +Q" pour retour au point A de départ de cycle. - figures 3

A      fractionnement par extraction solvant/extrait;

AB      étape de séparation: détente dans le détendeur DET pour parvenir, avec apport de chaleur +Q, en phase gazeuse sous-critique;

BC      étape de recompression: grâce au compresseur K, remontée à la pression supercritique de départ;

CA      étape de refroidissement: pour retour au point de départ du cycle grâce à -Q'. - figures 4

A      fractionnement par extraction solvant/extrait;

AB      étape de séparation: grâce au réchauffement +Q par échange thermique et +Q" par apport directe;

EP 0 254 610 B1

BC     étape de refroidissement: grâce à l'échangeur -Q avec le fluide en séparation se réchauffant et à -Q';

CA     étape de recompression: dans le compresseur K avec léger échauffement correspondant.

Dans les techniques de séparation solvant/extrait qui peuvent être mises en oeuvre au cours d'une seule étape, on fait baisser fortement la masse volumique du solvant, ce qui entraîne une forte variation de son pouvoir solvant, de sorte que l'extrait se sépare du solvant devenu un gaz sous-critique ou un fluide supercritique de faible masse volumique (état "quasi-gazeux").

Dans la plupart des applications décrites dans la littérature, le solvant est constitué d'un produit pur qui est le dioxyde de carbone, presque toujours pour les mêmes raisons que celles citées plus haut; en particulier, son innocuité indiscutable en fait un solvant de choix pour l'extraction de produits utilisés à des fins alimentaires tels que la décaféination du café, l'extraction des résines amérisantes du houblon, de la pipérine du poivre, etc. ou encore pour des applications pharmaceutiques.

Cependant, la plupart des solvants utilisés en extraction par fluides supercritiques présentent une faible polarité dans l'échelle de classement des solvants. Dés lors, ils ne sont guère utilisables dans un certain nombre d'applications à grand intérêt économique, leur pouvoir solvant étant trop faible tout au moins lorsqu'on les met en oeuvre à des pression voisines de leur pression critique. On citera comme exemple non limitatif, l'extraction de corps gras comme les glycérides par le dioxyde de carbone, qui n'est guère réalisable sauf si mise en oeuvre à des pressions très nettement supérieures à la pression critique. Ainsi, de nombreuses publications indiquant que la solubilité de l'huile végétale dans le dioxyde de carbone pur ne dépasse pas 1% en masse à une pression de 300 bars entre 20 et 80°C.

Dès lors l'utilisation de solvants en état supercritique n'est guère envisageable à l'échelle industrielle pour ce type d'application. C'est pourquoi il a été proposé, depuis longtemps, d'utiliser non plus un solvant pur mais un mélange comprenant d'une part un solvant classiquement utilisé en extraction par fluide supercritique c'est-à-dire dans la majorité des cas le dioxyde de carbone et un solvant liquide classique (hydrocarbures, solvants chlorés, alcools, cétones, etc.). Ce solvant liquide classique qu'on ajoute en faible concentration au solvant supercritique est ci-après appelé "entraîneur" car il permet d'augmenter considérablement la solubilité de certaines familles de molécules qui vont ainsi être entraînées par le solvant.

Ainsi, en reprenant l'exemple précédemment cité, l'expérience a confirmé que l'adjonction d'acétone, d'hexane ou de tétrachlorure de carbone à des concentrations assez faibles, le plus couramment de 5 à 10%, au dioxyde de carbone permet d'augmenter très sensiblement la solubilité des glycérides ou des acides gras. Par exemple, la solubilité de l'huile de palme qui n'est guère que de 0,2% en masse dans le dioxyde de carbone pur à 75°C sous 200 bars, atteint 5% en masse dans le mélange dioxyde de carbone/éthanol (à 10% d'éthanol en poids) dans les mêmes conditions de pression et de température.

La présente invention a, entre autres, pour objet la mise en oeuvre des procédés d'extraction par fluides supercritiques dans lesquels le solvant est constitué d'un mélange comprenant une très forte concentration d'un solvant couramment utilisé en extraction par fluides supercritiques tel le dioxyde de carbone, le protoxyde d'azote, les fluorochlorométhanes et autres fluorocarbones, les hydrocarbures légers, etc.) appelés dans ce qui suit solvant et d'une faible concentration, le titre massique étant le plus souvent inférieur à 10%, d'un solvant liquide classique tel que les (hydrocarbures $C_4$ à $C_{10}$, les alcools de $C_1$ à $C_5$, les solvants chlorés, les cétones, etc.) appelés dans ce qui suit entraîneurs.

En effet, comme dans le cas de la chromatographie et des mélanges solvant/modificateur, il est facile de réaliser un tel mélange solvant/entraîneur et de mettre en oeuvre l'extraction puis la séparation de l'extrait en boucle ouverte. Il est beaucoup moins facile de mettre en oeuvre ces opérations lorsque le fluide est recyclé comme cela est décrit dans la demande de brevet n° 85 010 468 du 9 juillet 1985 dont l'inventeur est un des inventeurs des présentes, car lors de la séparation fluide/ extrait il est fréquent qu'une partie de l'entraîneur reste dissoute dans l'extrait. Dès lors, la concentration en entraîneur du fluide recyclé s'en trouve modifiée et les performances de l'extraction altérées.

L'utilisation industrielle de ces mélanges implique donc de maîtriser parfaitement la concentration de fluide en entraîneur: on pourait imaginer de mesurer en continu cette concentration et de réaliser, à l'aide d'une pompe, les ajouts nécessaires, mais cette méthode est très difficile et coûteuse car une telle méthode est complexe. On retrouve donc ici les mêmes caractéristiques gênantes que celles citées plus haut à propos de FR-A-2527934.

Comme dans le cas des modificateurs, dans le cas des entraîneurs on se trouve face au problème consistant à devoir maintenir constante la concentration du fluide, soit en modificateur, soit en entraîneur, et dans toute la mesure du possible d'assurer la pureté du fluide contenant ledit entraîneur ou modificateur. Dans ce qui suit, et par commodité, on appellera "additif" le produit entraîneur ou modificateur ajouté au fluide de base.

La présente invention propose donc un procédé permettant, de façon très simple, de maintenir

4

EP 0 254 610 B1

constante la concentration du fluide en additif. Le principe de l'invention consiste à mettre en contact le fluide issu d'une ou des étapes d'extraction-séparation-préparation, avec une quantité importante d'additif maintenue à l'état liquide. Le fluide issu des étapes essentielles du procédé d'extraction-séparation-préparation est alors dans un état où sa masse volumique est généralement faible, c'est-à-dire à l'état gazeux ou quasi-gazeux. Il peut alors être mis en contact avec l'additif en phase liquide dans un contacteur classique gaz/liquide. La thermodynamique des équilibres liquide/vapeur enseigne que les compositions de la phase liquide et de la phase à plus faible masse volumique (état gazeux ou quasi-gazeux) sont déterminées comme le prévoit la règle de Gibbs dès lors que la température et la pression sont maintenues constantes. Rappelons que cette règle veut que le nombre de degrés de liberté soit égal au nombre de composants augmenté de deux et diminué du nombre de phases. En conséquence, lorsque le nombre de composants est de deux et le nombre de phases est de deux, le nombre de degrés de liberté est de deux.

Ainsi, dans ces conditions se le contacteur permet de porter les deux phases au voisinage de l'équilibre par réglage de la température et de la pression, la phase légère riche en solvant aura une concentration fixe en additif et ce tant que le contacteur contiendra encore une phase liquide riche en additif.

Le procédé objet de la présente invention consiste donc a maintenir constante la composition du mélange solvant/additif avant son recyclage à l'opération d'extraction-séparation-préparation par la mise en contact, d'une part du fluide issu de ces étapes principales d'extraction-séparation-préparation et, d'autre part d'additif dans un contacteur fonctionnant de façon à fixer les deux degrés de liberté, c'est-à-dire à une pression et à une température maintenues soigneusement constantes choisies de façon que l'additif soit liquide et le fluide à faible masse volumique, c'est-à-dire à l'état gazeux ou quasi-gazeux dans ces conditions. Le contacteur sera conçu pour permettre qu'un excellent contact entre ces deux phases puisse être réalisé afin que la composition du fluide issu du contacteur soit aussi voisine que possible de celle correspondant à l'équilibre thermodynamique.

Pour mieux faire comprendre les caractéristiques techniques et les avantages de la présente invention, on va en décrire un exemple de réalisation et un exemple d'application étant bien entendu que ceux-ci ne sont pas limitatifs quant à leur mode de mise en oeuvre et aux applications qu'on peut en faire.

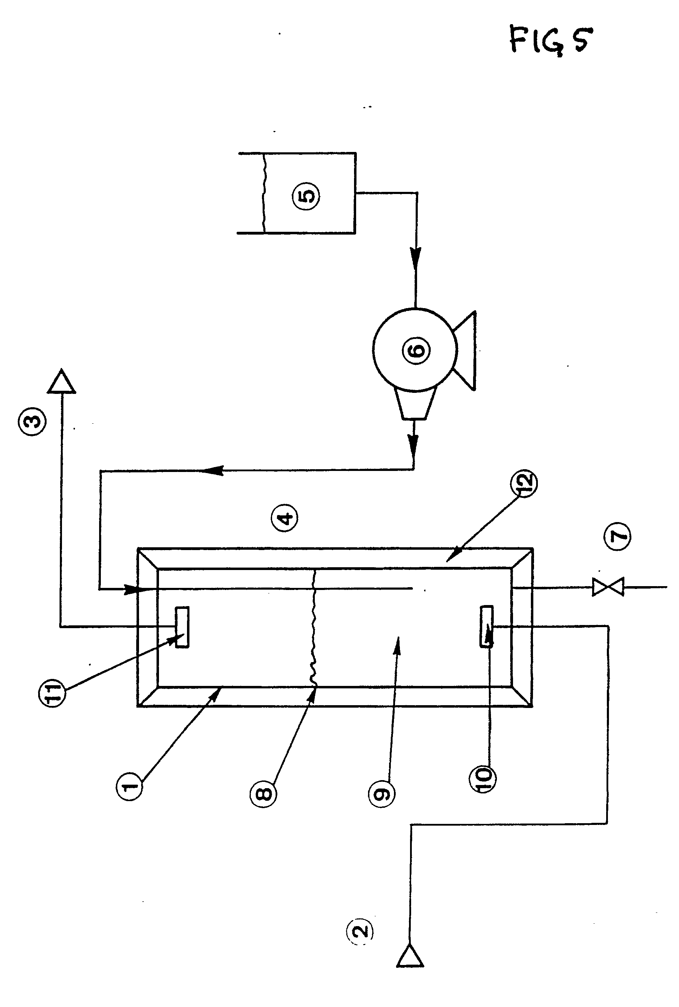

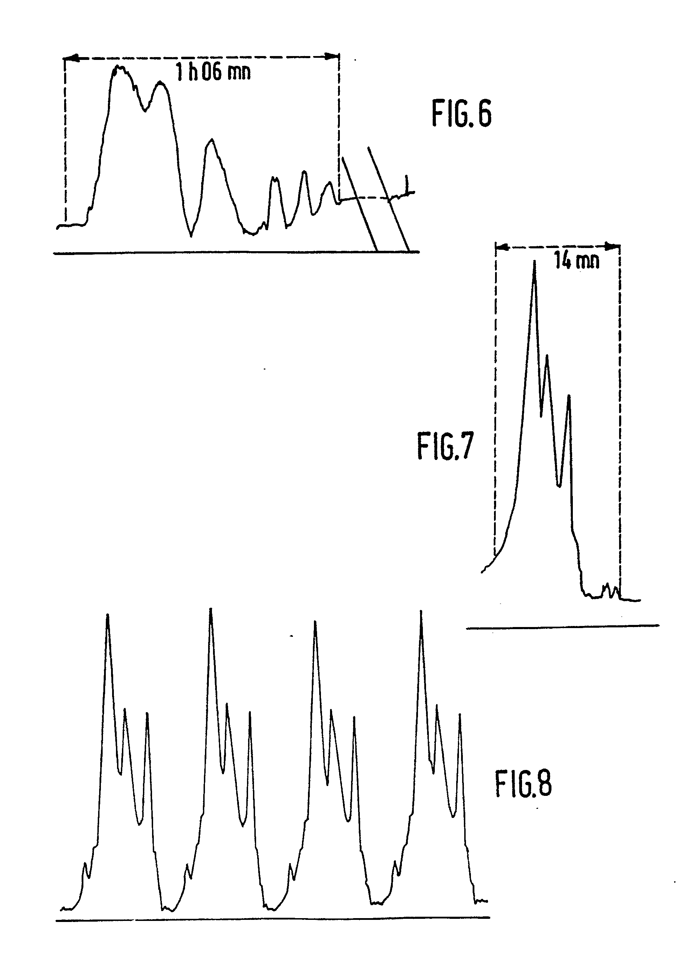

On se référera en plus des figures déjà décrites à la figure 5 qui représente le schéma d'un dispositif conforme à la présente invention ainsi qu'aux figures 6, 7 et 8 qui sont des chromatogrammes correspondant respectivement l'un à l'utilisation de $CO_2$ pur comme phase mobile, le second à celle de $CO_2$ et d'un modificateur, le troisième illustrant la régularité du cycle avec modificateur.

Le contacteur 1 est constitué essentiellement par un récipient, de préférence vertical et cylindrique. Le fluide 2 issu des étapes d'extraction-séparation-préparation est admis à la partie inférieure du contacteur 1 et, après contact avec l'additif 5 injecté dans le contacteur grâce à une pompe 6, sort du contacteur 1 en partie supérieure pour être ultérieurement recyclé vers les étapes d'extraction-séparation-préparation selon les procédés décrits, par exemple, dans les demandes de brevet ci-dessus mentionées et citées à titre d'exemple de tels procédés. Afin d'améliorer la qualité du contact entre la phase fluide et la phase liquide, on aura intérêt à remplir tout ou partie de contacteur 1 en recourant à des dispositifs permettant d'augmenter l'aire de contact tels des plateaux perforés ou un garnissage 9; le garnissage peut être constitué soit de remplissages classiques tels que des anneaux Raschig, des anneaux dits "anneaux pall", des selles vendues sous la dénomination commerciale de Intalox, etc.,soit très avantageusement d'un garnissage constitué de fils métalliques du type décrit dans FR-A-2263809. On aura également intérêt à utiliser un dispositif d'introduction 10 de fluide conçu pour réaliser une excellente dispersion, un plateau en matériau fritté est particulièrement avantageux. De même, le dispositif de sortie du fluide peut prévenir l'entraînement des fines vésicules de liquide qui sont toujours formées lors du contact fluide/liquide. L'utilisation d'un tampon dévésiculeur 11 en fibres tricotées ou comprimées ou d'un plateau en matériau fritté est également fortement recommandé.

On désigne, bien entendu, dans tout ce qui précède par fluide la phase à faible masse volumique.

D'autre part, afin d'éviter soit l'épuisement du liquide présent dans le contacteur 1, soit son débordement et donc son entraînement avec le fluide par la sortie supérieure, il est avantageux de maintenir constant le niveau 8 en commandant le fonctionnement de la pompe, 6 par un dispositif de mesure de niveau non représenté, de tout type adéquat.

Enfin, on prendra soin de maintenir soigneusement constantes la pression et la température dans le contacteur pour maîtriser les deux degrés de liberté et fixer la composition. Il est ainsi avantageux d'utiliser un contacteur muni d'une double enveloppe dans laquelle circule un fluide caloporteur ou, mieux encore, pour des installations de grandes capacités d'installer, à l'intérieur du contacteur, un échangeur de chaleur permettant d'apporter la chaleur nécessaire à la mise en équilibre des deux phases. On aura même intérêt à utiliser, simultanément, les deux systèmes.

on remarquera que ces procédés et dispositifs de mise en oeuvre décrits ci-dessus permettent également de purifier le fluide avant son recyclage dans les étapes d'extraction-séparation-préparation. En effet, la séparation fluide/produit n'est jamais parfaite et une faible concentration de produit demeure dans le fluide. Ceci peut être très gènant s'il s'agit de fractions légères de produit qui pourraient s'accumuler dans le fluide et perturber l'extraction-séparation-préparation. La mise en contact du fluide avec l'additif permet, certes, au premier chef de réaliser le mélange solvant plus additif de façon optimale, mais également de débarrasser le fluide des traces de produit non séparées et donc de garantir la constance des propriétés du mélange. On peut, d'ailleurs, de temps en temps, vidanger une partie de la phase liquide présente dans le contacteur 1 grâce à la vanne 7.

Exemple de mise en oeuvre du procédé

on part d'une charge constituée par un mélange d'esters méthyliques d'acides gras dont la composition molaire est approximativement la suivante:

. $C_{16}$ ............... 10%
. $C_{18}$ ............... 20%
. $C_{20}$ ............... 45%
. autres ........... 25%

On travaille avec le dispositif de la figure 1.

a) Dans une première expérience et à titre de référence, on travaille avec une phase mobile constituée par $CO_2$ pur dans les conditions suivantes (figure 6):

. phase stationnaire: silice (Si 60 de Merck) 15 à 25 $\mu$m
. colonne: diamètre 60 mm, longueur 600 mm
. température: 25° C
. pression: 140 bars
. débit: 50 litres de $CO_2$ liquide par heure
. durée du cycle: 1 h 06 minutes
. quantité injectée: 2 ml/injection, soit 43,6 ml/jour

On récupère ainsi 11 ml/j de produit purifié de composition suivante:

| | |
|---|---|
| . $C_{16}$ ................ | 1% |
| . $C_{18}$ ............... | 6% |
| . $C_{20}$ .............. | 91% |
| . autres ........... | 2% |

b) dans une seconde expérience, on utilise une phase mobile composée de $CO_2$ et de modificateur ('éthanol). On travaille avec le dispositif de la figure 5 et le montage de la figure 1.

Le contacteur est un tube cylindrique à double enveloppe thermostaté (figure 5) d'un diamètre intérieur de 60 mm, d'une hauteur de 1 000 mm, muni de plateaux en acier inoxydable fritté (= 30 $\mu$m) à l'entrée et à la sortie de l'éluant et rempli de garnissage du type, décrit dans FR-A- 2 263 809 cité ci-dessus, composé à partir de treillis en acier inoxydable à maille carrée de 2 mm en fils de 1 mm de diamètre. On travaille dans les conditions suivantes (figures 7 et 8):

. température du contacteur:      40°C

. pression du contacteur:      52 bars

. colonne:

    . diamètre ................    60 mm

    . longueur ................    600 mm

    . température ............    40°C

    . pression ...............    100 bars

    . débit ..................    50 litres du mélange à l'état liquide/h

. durée du cycle............    14 minutes

. quantité injectée.........    2ml/injection, soit

103ml/jour

On récupére 25ml/jour de produit purifié de composition suivante:

$C_{16}$.......... 1%

$C_{18}$.......... 8%

$C_{20}$.......... 89%

autres....... 2%

Ce procédé et ce dispositif s'appliquent donc à tous les cas où on utilise pour des opérations d'extraction et/ou séparation et/ou préparation, des fluides à l'état supercritique auxquels certains additifs apportent des avantages remarquables tels ceux désignés ci-dessus, comme c'est le cas pour les modificateurs et les entraineurs cités ci-dessus à titre d'exemple.

**Revendications**

1. Procédé d'extraction/séparation/préparation mettant en oeuvre un fluide en état supercritique constitué d'un mélange comprenant majoritairement un fluide dit solvant et, jusqu'à une concentration pondérale de 10%, un second fluide, appelé additif, l'étape de séparation des produits étant par ailleurs mise en évidence par une variation importante du pouvoir solvant du mélange initial grâce à la diminution de sa masse volumique entrainée par sa dépressurisation dans des conditions quasi isothermes, ce procédé étant caractérisé en ce que ce mélange est obtenu par mise au contact du mélange gazeux issu de l'étape de séparation des produits avec une quantité d'additif suffisante, dite excès d'additif, pour que, dans des conditions de pression et de température prédéterminées, l'additif soit liquide, le fluide étant à faible masse volumique, ce qui assure l'élimination des traces restantes des produits, le réajustement de la composition du mélange et son recyclage, et le maintien de la concentration en additif.

2. Procédé selon la revendication 1, appliqué à la chromatographie préparative avec éluant supercrique caractérisé en ce qu'il met en oeuvre un fluide éluant constitué d'un mélange comprenant majoritairement le solvant et l'additif, et en ce que le mélange est obtenu par mise en contact du mélange gazeux de l'étape de séparation des produits fractionnés, avec ledit excès d'additif.

3. Procédé selon la revendication 1, appliqué à l'extraction, caractérisé en ce que le mélange est obtenu par la mise en contact du mélange gazeux de l'étape de séparation des extraits avec ledit excès d'additif.

4. Procédé selon l'une des revendications 1 à 3, caractérisé par le fait que le fluide solvant est choisi parmi le dioxyde de carbone, le protoxyde d'azote, les fluorochlorométanes, les fluorocarbones et les hydrocarbures légers.

5. Procédé selon l'une des revendications 1, 2 ou 4, caractérisé par le fait que l'additif modificateur est choisi parmi les hydrocarbures en $C_4$ à $C_{10}$ et les alcools en $C_1$ à $C_5$.

6. Procédé selon l'une des revendications 1, 3 ou 4, caractérisé par le fait que l'additif entraineur est choisi parmi les hydrocarbures, solvants chlorés, alcools et cétones.

## Claims

1. Process for extraction/separation/preparation employing a fluid in the supercritical state constituted of a mixture comprising a major part of a solvent fluid, and up to 10% by weight of a second fluid, referred to as the additive, the separation stage of the products being further enhanced through significant variation in the solvent ability of the initial mixture as a result of decrease in the specific gravity thereof brought about by depressurization under practically isothermal conditions, said process being characterized in that said mixture is obtained by contacting the gaseous mixture originating from the product separation stage with a sufficiently large amount of additive, referred to as an additive excess, whereby, under predetermined pressure and temperature conditions, the additive is liquid, with the fluid having a low density thereby ensuring elimination of the remaining traces of the products, readjustment of the composition of the mixture and recycling thereof, while the additive concentration is maintained.

2. Process according to claim 1, applied to preparative chromotography with a supercritical eluant, characterized in that an eluant fluid is employed that consists of a mixture the major part of which consists of the solvent and the additive, and in that the mixture is obtained by contacting the gaseous mixture from the fractionated products with said excess of additive.

3. Process according to claim 1, applied to extraction, characterized in that the mixture is obtained by contacting the gaseous mixture from the extract separation stage with said excess of additive.

4. Process according to one of claims 1 to 3, characterized in that the solvent fluid is selected from among carbon dioxide, nitric oxide, fluorochloromethanes, fluorocarbons and light hydrocarbons.

5. Process according to one of claims 1, 2 or 4, characterized in that the modifying additive is selected from $C_4$ to $C_{10}$ hydrocarbons and $C_1$ to $C_5$ alcohols.

6. Process according to one of claims 1, 3 or 4 characterized in that the entraining additive is selected from hydrocarbons, chlorinated solvents, alcohols and ketones.

## Patentansprüche

1. Verfahren zur Extraktion/Trennung/Bereitung bei welcher ein überkritisches Fludium benutzt wird welches eine Mischung aus grösstenteils einem Fludium, Solvent genannt, und bis 10% Gewichtskonzentration von einem zweiten Fludium, Additiv genannt, enthält, wobei der Trennungsschritt der Produkte übrigens erhalten wird durch eine starke Schwankung der Lösungskraft der Ausgangsmischung dank der Verminderung der volumenbezogenen Masse durch ihren Druckabfall in quasi isothermische Bedingungen, wobei dieses Verfahren dadurch gekennzeichnet ist, dass diese Mischung durch das in Berührungbringen der aus dem Trennungsschritt der Produkte entstandenen Gasmischung mit einer Menge Additiv, Additivüberschuss genannt, erhalten wird, die ausreichend ist, damit unter vorherbestimmten Druck- und Temperaturbedingungen das Additiv flüssig bleibt, während das Fludium eine geringe volumbezogene Masse darstellt, was die Eliminierung der noch vorhandenen Spuren der Produkte, die Wiederherstellung der Zusammensetzung der Mischung und ihre Rezyklierung, und den Erhalt der Addtitivkonzentration sichert.

2. Verfahren nach Anspruch 1, für die präparativen Chromatographie mit superkritischen Eluierungsmitteln, dadurch gekennzeichnet, dass ein flüssiges Eluierungsmittel anwendet wird, das aus einer Mischug besteht, in Mehrheit das Solvent und das Additiv enthaltend, und dass diese Mischung durch das in Berührungbringen der Gasmischung des Trennungsschritts der fraktionierten Produkte mit dem Additivüberschuss erhalten wird.

3. Verfahren nach Anspruch 1, angewandt auf die Extraktion, dadurch gekennzeichnet, dass die Mischung durch das in Berührungbringen der Gasmischung des Trennungsschritts der Extrakte mit dem Additivüberschuss erhalten wird.

4. Verfahren nach einem der Ansprüche 1 bis 3, dadurch gekennzeichnet, dass das Fliessmittel aus der Gruppe bestehend aus Kohlendioxid, Stickstoffoxid, Fluorochloromethan, Fluorkohlenstoffen und leichten Kohlenwasserstoffen ausgewählt wird.

5. Verfahren nach einem der Ansprüche 1, 2 oder 4, dadurch gekennzeichnet, dass der Additifmodifikator aus $C_4$ bis $C_{10}$ Kohlenwasserstoffen und $C_1$ bis $C_5$ Alkoholen gewählt wird.

6. Verfahren nach einem der Ansprüche 1, 3 oder 4, dadurch gekennzeichnet, dass das Trägeradditiv aus der Gruppe bestehend aus Kohlenwasserstoffen, gechlorten Lösemitteln, Alkoholen und Ketonen ausgewählt wird.

FIG.1a

FIG.1b

FIG.2a

FIG.2b

FIG.3a

FIG.3b

FIG.4a

FIG.4b

FIG 5

1 h 06 mn

FIG.6

FIG.7

14 mn

FIG.8